# EUROPEAN PATENT SPECIFICATION

(11) **EP 4 471 379 B1**
(45) Date of publication and mention of the grant of the patent: **19.08.2026**
(21) Application number: 23425027.2
(22) Date of filing: 29.05.2023
(51) Int. Cl.: G01C 21/20, G06T 19/00, G01S 7/539, B63B 49/00

(54) **AUGMENTED REALITY INFORMATION FOR A MARINE ENVIRONMENT**
INFORMATIONEN DER ERWEITERTEN REALITÄT FÜR EINE MEERESUMGEBUNG
INFORMATIONS DE RÉALITÉ AUGMENTÉE POUR UN ENVIRONNEMENT MARIN

(43) Date of publication of application: 04.12.2024
(73) Proprietor: Navico, Inc., Tulsa, OK 74134-5885 (US)
(72) Inventor: Cecchini, Massimiliano, 20135 MILANO (IT); Matteucci, Maurizio, 55041 CAMAIORE (LU) (IT); Karayianni, Demitri Andreas, LONDON, TW13LJ (GB)
(74) Representative: Studio Torta S.p.A.

(56) References cited:
- EP-A1- 4 047 312
- EP-A1- 4 047 313
- KR-A- 20160 116 715
- US-A1- 2014 240 350
- US-A1- 2017 160 393
- US-A1- 2019 251 356
- US-A1- 2021 080 260
- US-A1- 2021 116 249
- US-B2- 9 201 142

## Description

### FIELD OF THE INVENTION

Embodiments of the present invention relate generally to systems, methods, and computer program products for overlaying a representation of a location of interest on an image of an environment around a watercraft to form an augmented reality image.

### BACKGROUND OF THE INVENTION

In watercraft displays that are currently available, users frequently have difficulty finding locations of interest while on a watercraft, particularly where those locations of interest are submerged underwater or located on land. Information is frequently presented in a manner that is difficult for novice users to interpret. Additionally, the user is typically required to navigate between multiple screens to obtain information, making it difficult for the user to find the information that they are seeking.

Patent application US 2021/080260 A1 relates generally to passage planning and more particularly to systems and methods for substantially automated and environmentally compensated passage planning and/or general navigation for mobile structures. Patent document

US2021/116249 A1 relates to an augmented reality marine navigation system including a wearable display device and an electronic controller configured to display computer-generated graphical elements overlaid onto a real-world field of view.

Patent US 9201142 B2 discloses a method for presenting sonar or radar image data on a display (e.g., AR glasses) as an overlay on top of the real-world environment information currently being viewed by the user.
Patent application US 2019/0251356 A1 discloses an augmented reality navigation system that renders an integrated model on a display. The display is explicitly divided by a waterline, showing above-water features in an upper portion and underwater sonar features in a separate, lower portion.

Patent application KR 2016/0116715 A relates to a marine monitoring system, the server and method relates to a marine monitoring system, the server and method and, more particularly, performs monitoring to determine the aquatic environment of the ocean.

However, the above-mentioned issues are not solved.

### BRIEF SUMMARY OF THE INVENTION

The invention is set out in the annexed claims.

Various embodiments provided herein assist users to identify locations of interest so that the user may obtain additional information regarding the locations of interest or navigate to the location of interest. An electronic device such as a smart phone or another display on a watercraft may present an augmented reality image thereon that contains a live image of the environment around the watercraft and representations of one or more locations of interest. The representations of the location(s) of interest are overlayed on the live image of the environment.

The augmented reality images provided, in various embodiments, beneficially identify locations of interest for the user so that the user can find these locations of interest where they otherwise could not do so. For example, when traveling along, a user may pass by a historic shipwreck, and the user may be completely unaware that this is the case.

The user may optionally select the representation of the location of interest or another item associated with the location of interest to cause further information to be presented. This may be historical information, one or more images such as sonar images of an underwater object, depth or distance information, or some other information. Representations are overlayed onto the live image to form the augmented reality image, and this may beneficially enable users to avoid the need to navigate through multiple screens.

The augmented reality image increases the ease of navigation for users as users are attempting to navigate towards a location of interest. A user may turn a camera of his or her electronic device so that the location of interest is within the field of view for the camera, and, once the location of interest is represented in the augmented reality image, the user can intuitively rotate the watercraft to navigate towards the direction of the location of interest. By contrast, where a user previously was trying to reach a location of interest, the process was much more difficult - a user would need to identify where the location of interest was located on a map, identify where the watercraft was located on the map, determine the watercraft's heading direction, and determine how much the watercraft needed to be rotated to reach the location of interest, and this was often done on open waters where no or limited landmarks were available to assist in navigation. Thus, more steps were involved, the room for error was significantly higher, and the level of difficulty and time required by users was high. Because the approaches contemplated by various embodiments provided herein reduce the level of difficulty and reduce the time required for navigation, more novice users are likely to use such approaches.

Additional information available for presentation may be provided in various forms, with information potentially being provided in the form of underwater images, sonar images, radar images, navigational charts, maps, geographic data, or other historical information. Additional information may be received from devices on a watercraft such as a sonar transducer assembly, radar, sensors, cameras, memory, a communications interface, a remote device, or from some other source. Additional information may also be received from another watercraft, which may be located near a user's watercraft, and/or a remote server or database.

### BRIEF DESCRIPTION OF THE DRAWINGS

Having thus described the invention in general terms, reference will now be made to the accompanying drawings, which are not necessarily drawn to scale, and wherein:
FIG. 1 is a schematic view illustrating an example watercraft including various marine devices, in accordance with some embodiments discussed herein;
FIG. 2A is a front view illustrating an example smart phone presenting an augmented reality image on a display of the smart phone with a location of interest identified thereon, in accordance with some embodiments discussed herein;
FIG. 2B is a front view of the smart phone of FIG. 2A where additional information in the form of a sonar image of the location of interest is presented on the display, in accordance with some embodiments discussed herein;
FIG. 2C is a front view of the smart phone of FIG. 2A where additional information in the form of a sonar image of the location of interest and textual information on the location of interest is presented on the display, in accordance with some embodiments discussed herein;
FIG. 3 is a front view illustrating an example display of a marine electronic device where the sonar image of FIGS. 2B and 2C is expanded to a full-screen mode, in accordance with some embodiments discussed herein;
FIG. 4 is a front view illustrating an example smart phone presenting an augmented reality image on a display of the smart phone with a location of interest identified thereon where additional information in the form of an underwater image of the location of interest is presented on the display, in accordance with some embodiments discussed herein;
FIG. 5 is a front view illustrating an example smart phone presenting an augmented reality image on a display of the smart phone with multiple land-based locations of interest identified thereon, in accordance with an example that does not correspond to the claimed invention;
FIG. 6 is a front view illustrating an example smart phone presenting an augmented reality image on a display of the smart phone with multiple locations of interest identified thereon in the form of other watercraft, in accordance with some embodiments discussed herein;
FIG. 7 is a front view illustrating an example smart phone presenting an augmented reality image on a display of the smart phone with a graphical representation of the wind speed overlayed on the augmented reality image, in accordance with some embodiments discussed herein;
FIG. 8 is a front view illustrating an example smart phone presenting an augmented reality image on a display of the smart phone with a graphical representation of the water temperature at various areas overlayed on the augmented reality image, in accordance with some embodiments discussed herein;
FIG. 9 is a front view illustrating an example display of a marine electronic device where an augmented reality image is presented on the display with multiple land-based locations of interest identified thereon, in accordance with examples that do not correspond to the claimed invention;
FIG. 10 is a front view illustrating an example display of a marine electronic device where an augmented reality image is presented on the display with an underwater location of interest and an indicator providing navigational guidance to the location of interest identified in the augmented reality image, in accordance with some embodiments discussed herein;
FIG. 11 is a front view illustrating an example display of a marine electronic device where an augmented reality image is presented on the display with a location of interest in the form of a buoy identified thereon, in accordance with some embodiments discussed herein;
FIG. 12 is a front view illustrating smart glasses configured to generate an augmented reality image, in accordance with some embodiments discussed herein;
FIG. 13 is a schematic view illustrating the smart glasses of FIG. 12 being used to see an augmented reality image, in accordance with some embodiments discussed herein;
FIG. 14 is a block diagram illustrating electrical components in an example system, in accordance with some embodiments discussed herein;
FIG. 15 is a flow chart illustrating an example method for overlaying a representation of a location of interest on an image of an environment around a watercraft, in accordance with some embodiments discussed herein;
FIG. 16A is schematic view illustrating the field of view generated by a camera of a smart phone, in accordance with some embodiments discussed herein; and
FIG. 16B is a schematic view illustrating various representations for locations of interest at different positions relative to the field of view generated by the camera of FIG. 16A, in accordance with some embodiments discussed herein.

### DETAILED DESCRIPTION

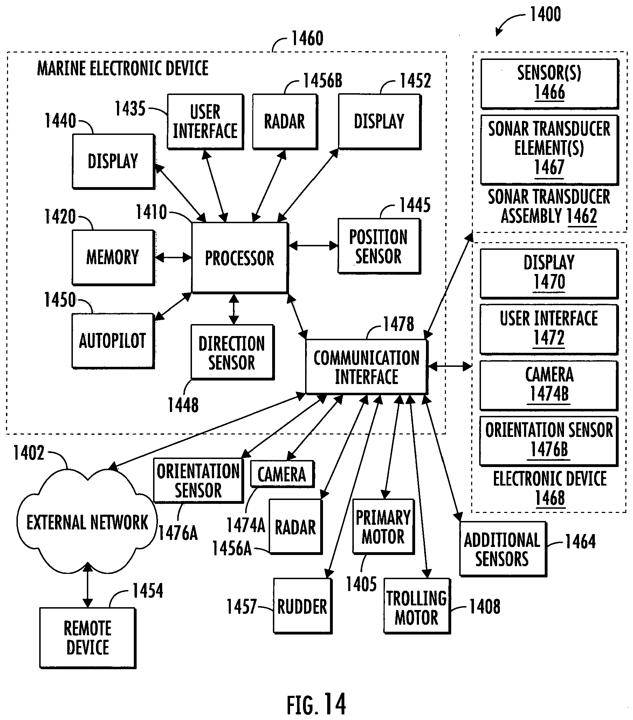

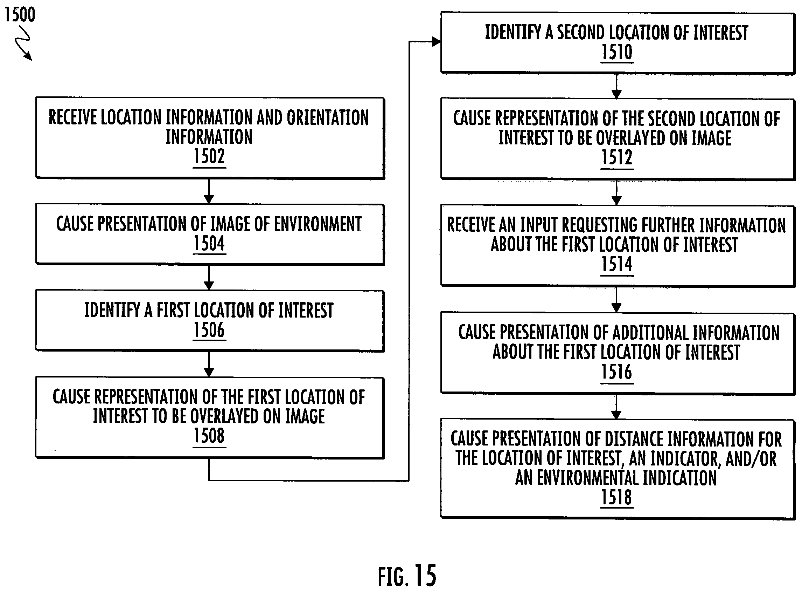

Example embodiments of the present invention now will be described more fully hereinafter with reference to the accompanying drawings, in which some, but not all embodiments of the invention are shown. Indeed, the invention may be embodied in many different forms and should not be construed as limited to the example embodiments set forth herein; rather, these embodiments are provided so that this disclosure will satisfy applicable legal requirements. With the exception of FIGS. 14 and 15, like reference numerals generally refer to like elements throughout. For example, reference numerals 254, 554A, 554B, 954A, and 954B are each associated with icons.

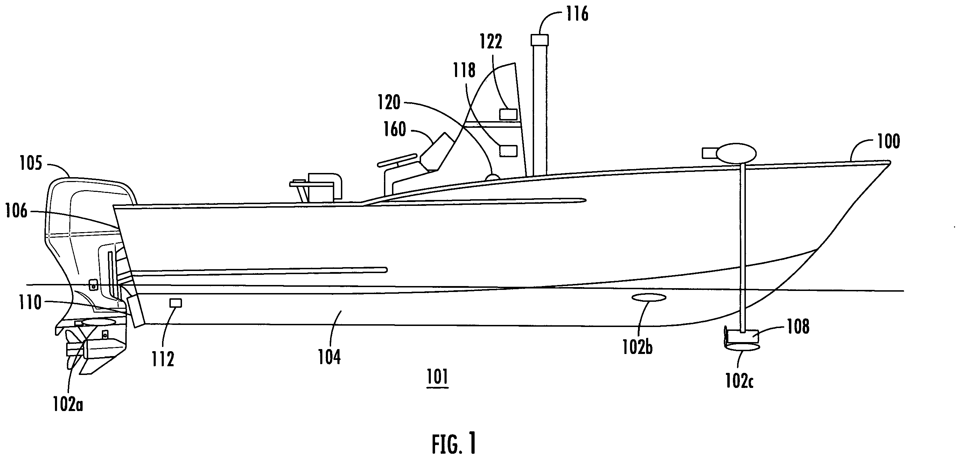

FIG. 1 is a schematic view illustrating an example watercraft including various marine devices. As illustrated in FIG. 1, the watercraft 100 (e.g., a vessel) is configured to traverse a marine environment, e.g. body of water 101, and may use one or more sonar transducer assemblies 102a, 102b, and 102c disposed on and/or proximate to the watercraft 100. Notably, example watercraft contemplated herein may be surface watercraft, submersible watercraft, or any other implementation known to those skilled in the art. The sonar transducer assemblies 102a, 102b, and 102c may each include one or more transducer elements configured to transmit sound waves into a body of water, receive sonar returns from the body of water, and convert the sonar returns into sonar return data. Various types of sonar transducers may be utilized - for example, a linear downscan sonar transducer, a conical downscan sonar transducer, a sidescan sonar transducer, and/or one or more arrays of a plurality of sonar transducer elements.

Depending on the configuration, the watercraft 100 may include a primary motor 105, which may be a main propulsion motor such as an outboard or inboard motor. Additionally, the watercraft 100 may include a trolling motor 108 configured to propel the watercraft 100 or maintain a position. The one or more sonar transducer assemblies (e.g., 102a, 102b, and/or 102c) may be mounted in various positions and to various portions of the watercraft 100 and/or equipment associated with the watercraft 100. For example, the sonar transducer assembly may be mounted to the transom 106 of the watercraft 100, such as depicted by sonar transducer assembly 102a. The sonar transducer assembly may be mounted to the bottom or side of the hull 104 of the watercraft 100, such as depicted by sonar transducer assembly 102b. The sonar transducer assembly may be mounted to the trolling motor 108, such as depicted by sonar transducer assembly 102c. Other mounting configurations are contemplated also, such as may enable rotation of the sonar transducer assembly (e.g., mechanical and/or manual rotation, such as on a rod or other mounting connection).

The watercraft 100 may also include a marine electronic device 160, such as may be utilized by a user to interact with, view, or otherwise control various functionality regarding the watercraft, including, for example, nautical charts and various sonar systems described herein. In the illustrated embodiment, the marine electronic device 160 is positioned proximate the helm (e.g., steering wheel) of the watercraft 100 - although other places on the watercraft 100 are contemplated. Likewise, additionally or alternatively, a remote device (such as a user's mobile device) may include functionality of a marine electronic device.

The watercraft 100 may also comprise other components within the marine electronic device 160 or at the helm. In FIG. 1, the watercraft 100 comprises a radar 116, which is mounted at an elevated position (although other positions relative to the watercraft are also contemplated). Radar (RAdio Detection And Ranging) uses radio waves to determine the distance, angle, and radial velocity of objects relative to the watercraft. A radar system typically includes an antenna, a transmitter that emits electromagnetic waves corresponding to radar signals, a receiver for receiving radar return signals (the radar signals that reflect off objects and return to the antenna), and a processor to process the radar return signals. The processed radar return signals can be formed into radar image data that is presented on a display device of the watercraft, often as an image type known as plan position indicator (PPI), although other image types can be formed (such as described herein).

The watercraft 100 also comprises an AIS transceiver 118, a direction sensor 120, and a camera 122, and these components are each positioned at or near the helm (although other positions relative to the watercraft 100 are also contemplated). Additionally, the watercraft 100 comprises a rudder 110 at the stern of the watercraft 100, and the rudder 110 is positioned on the watercraft 100 so that the rudder 110 will rest in the body of water 101. In other embodiments, some of these components may be integrated into the marine electronic device 160 or other devices. Another example device on the watercraft 100 includes a temperature sensor 112 that may be positioned so that it will either rest within or outside of the body of water 101. Other example devices include a wind sensor, one or more speakers, and various vessel devices/features (e.g., doors, bilge pump, fuel tank, etc.), among other things. Additionally, one or more sensors may be associated with marine devices; for example, a sensor may be provided to detect the position of the primary motor 105, the trolling motor 108, or the rudder 110.

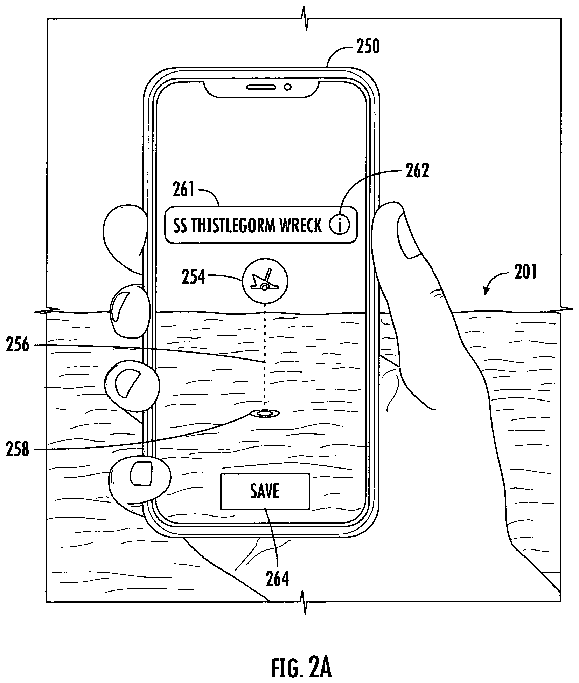

Various embodiments herein provide augmented reality images that may be presented on a display of an electronic device, particularly focused, in various embodiments, on use within the marine environment. FIGS. 2A-2C illustrate one example where augmented reality images are presented on a display of a smart phone 250 (although any device with a screen and a camera is contemplated herein). Looking first at FIG. 2A, an example smart phone 250 is illustrated with the smart phone 250 presenting an augmented reality image on a display of the smart phone 250 with a location of interest identified thereon. The smart phone 250 is oriented so that a camera of the smart phone 250 is directed towards a body of water 201. The smart phone 250 generally presents the image generated by the camera so that the environment around the watercraft within the field of view of the camera is presented on the display.

Based on the location information and orientation information for the smart phone 250, the presence of one or more locations of interest within the field of view for the camera of the smart phone are determined. These locations of interest within the field of view are then represented on the image so that these locations may be more easily identified by the user. In FIG. 2A, an icon 254 is presented, and the icon 254 has a symbol thereon to indicate that the icon 254 is representative of a shipwreck. While the location of interest is a shipwreck in FIG. 2A, the location of interest could be a variety of other locations such as a an underwater reef, a dumping ground, or an animal. A line 256 extends from the icon 254 to the point 258 at the water surface that is directly above a location of the shipwreck. Upon identification of a location of interest that the user is interested in, the user can select a save button 264 to save information regarding the location of interest in memory. In some embodiments, the icon 254 may be selected to display additional information about the location of interest associated with the icon 254.

Additional information available for presentation may be provided in the form of underwater images or sonar images. Additional information may be received from devices on a watercraft such as a sonar transducer assemblies, radar, sensors, cameras, memory, a communications interface, a remote device, or from some other source. Additional information may also be received from another watercraft, which may be located near a user's watercraft. Additional information may also be received from a remote server and/or database.

Additionally, a label 261 is provided proximate to the icon 254. The label 261 is provided above the icon 254 in the illustrated embodiment, but the label 261 may be positioned at other locations in other embodiments. For example, where several locations of interest are located close to each other in an augmented reality image, the labels for each of the locations of interest may be adjusted in position so that the labels and icons can each be easily seen by the user.

The label 261 also includes an information button 262. In the illustrated embodiment, only one information button 262 is provided. However, in other embodiments, multiple buttons may be provided to permit the user to select different types of information for viewing. Alternatively, in some embodiments, only one information button 262 is provided, and this information button 262 may be selected to provide further information and/or one or more additional buttons to obtain more detailed information. In some embodiments, two or more of the icon 254, the label 261, and the information button 262 may be selectable to present differing types of information about the location of interest or to cause different actions - for example, selection of the icon 254 could initiate navigational guidance to the location of interest represented by the icon 254, selection of the information button 262 could cause additional textual information to appear on the display, and selection of the label 261 could cause an image of the location of interest to appear on the display. In some embodiments, the label 261 includes a distance of the location of interest from the watercraft or the smart phone 250. The icon 254 and the label 261 are presented on the display without obscuring significant portions of the live image in the augmented reality image.

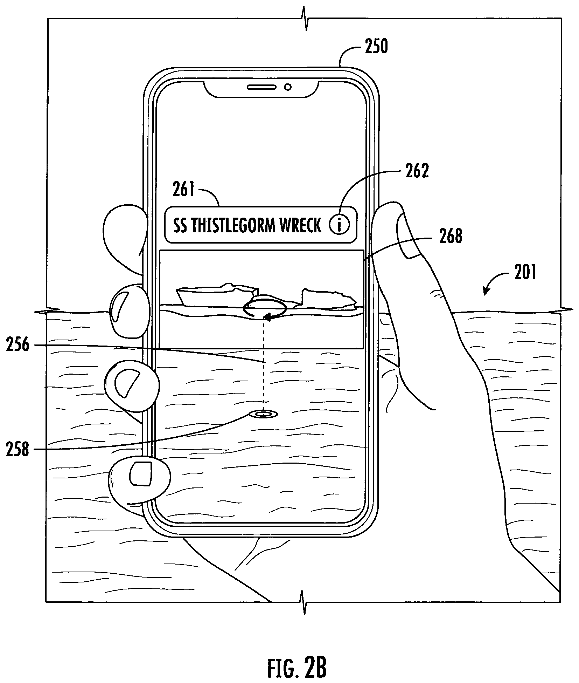

Looking now at FIG. 2B, the smart phone 250 is illustrated where additional information of the location of interest is presented on the display of the smart phone 250. This additional information is provided in the form a sonar image 268. This sonar image 268 may be a live sonar image in some embodiments, with the sonar data being obtained from a sonar transducer assembly 1462 *(see* FIG. 14) of the watercraft. However, the sonar image 268 may also be a historical sonar image in some embodiments. As used herein, a "historical sonar image" is any sonar image that is not a live sonar image. A historical sonar image may be received from the sonar transducer assembly 1462 of the watercraft, but the historical sonar image may also be received from other sources, such as from another watercraft and/or a remote server/database.

The sonar image 268 is presented on the display in an illustrated orientation. However, the sonar image 268 may be rotated to other orientations in some embodiments. A user may, for example, rotate the sonar image 268 or any other images described herein by touching the sonar image 268 or the other image on the display and shifting his or her finger. Additionally, a user may, for example, zoom in on the sonar image 268 or any other images described herein by touching the sonar image 268 or the other image on the display with two fingers and expanding his or her fingers, and the user may zoom out on the sonar image 268 or another image by touching the sonar image 268 or the other image on the display with two fingers and shifting his or her fingers closer together. However, it should be understood that these approaches for adjusting the sonar image 268 are merely exemplary and that other approaches are also contemplated.

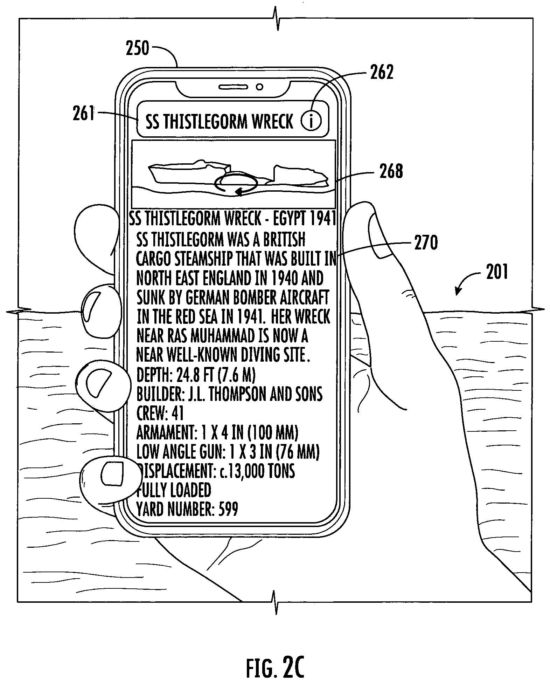

Looking now at FIG. 2C, the smart phone 250 is illustrated where additional information in the form of a textual information window 270 is also presented on the display of the smart phone 250. This textual information window 270 provides information about the location of interest, and the textual information window 270 is presented alongside the sonar image 268 in FIG. 2C. The textual information window 270 comprises historical descriptions regarding the location of interest and the depth of the location of interest. However, other information may be presented in the textual information window 270 such as a distance of the location of interest away from the smart phone 250 or the watercraft. Thus, the augmented reality images contemplated herein may provide additional information to the user so that the user may learn more historical facts about their surroundings while travelling on watercraft.

While textual information and sonar images have been illustrated as different types of additional information that may be presented in the display of a smart phone, additional information may also be provided in other forms as well. Additional information may be presented by sound, by other types of images, by providing links to content on one or more external websites, etc.

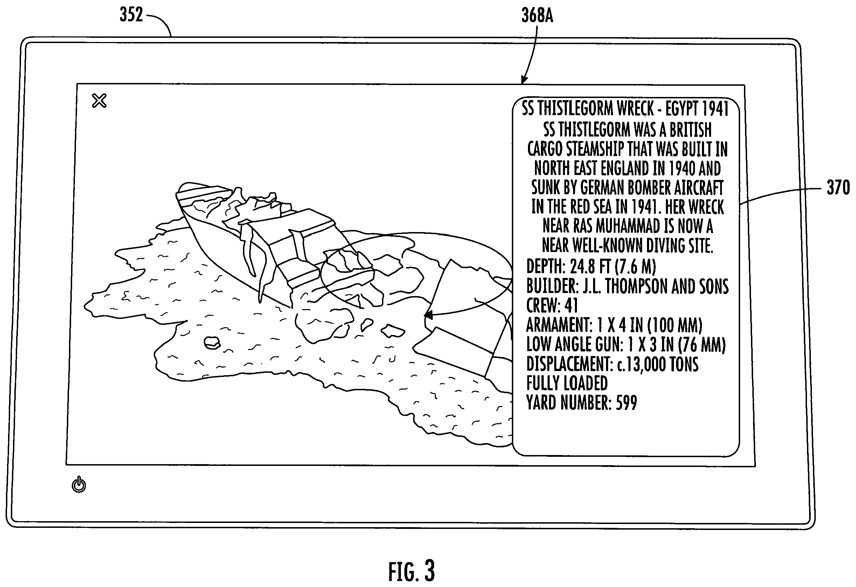

Another example of an electronic device is a display of a marine electronic device, and an example of a display 352 is illustrated in FIG. 3. In FIG. 3, the display 352 illustrates an enlarged sonar image 368A. The enlarged sonar image 368A is similar to the sonar image 268 of FIGS. 2B and 2C, but it covers the entire screen of the display 352.

In some embodiments, inputs at a first device may be configured to cause information to be presented on the display of a second device. For example, a touch input by a user at the display of the smart phone 250 illustrated in FIGS. 2A-2C may cause the presentation of information such as the enlarged sonar image 368A and the textual information 370 on the display 352 or another device. This may be beneficial so that the enlarged sonar image 368A and the textual information 370 may be presented in a larger size than permitted on the smart phone. As another example, an input by a user at the display 352 or another device may cause the presentation of information on the display of the smart phone 250.

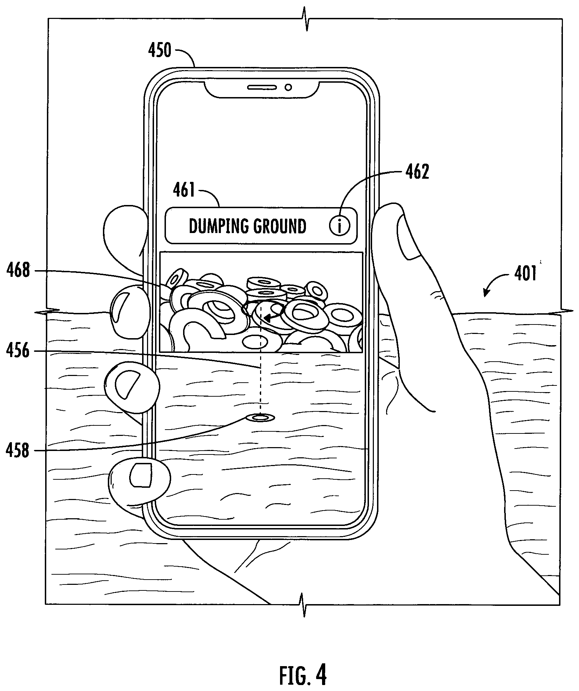

Various locations of interest are contemplated, and FIG. 4 shows another example where the location of interest is a dumping ground underneath the water. In FIG. 4, an example smart phone 450 is illustrated with the smart phone 450 presenting an augmented reality image on a display of the smart phone 450 with a location of interest identified thereon. The location of interest in FIG. 4 is a dumping ground, and this information is included in the label 461. An underwater image 468 of the dumping ground is overlayed on the image presented in the display, and a line 456 extends from the underwater image 468 to the point 458 at the water surface that is directly above a location of the dumping ground. In some embodiments, this underwater image 468 may be adjusted in a manner similar to the sonar image 268 of FIG. 2B.

The smart phone 450 is oriented so that a camera of the smart phone 450 is directed towards a body of water 401. The smart phone 450 presents the image generated by the camera so that the environment around the watercraft in the field of view of the camera is presented on the display. The image presented on the display may be a live image being captured at the camera.

Based on the location information and orientation information for the smart phone 450, the presence of one or more locations of interest within the field of view for the camera of the smart phone are determined. These locations of interest within the field of view are then represented on the image so that these locations may be more easily identified by the user. Additionally, a label 461 is provided that includes an information button 462, and these features may operate similarly to the label 261 and the information button 262 described in reference to FIGS. 2A-2C.

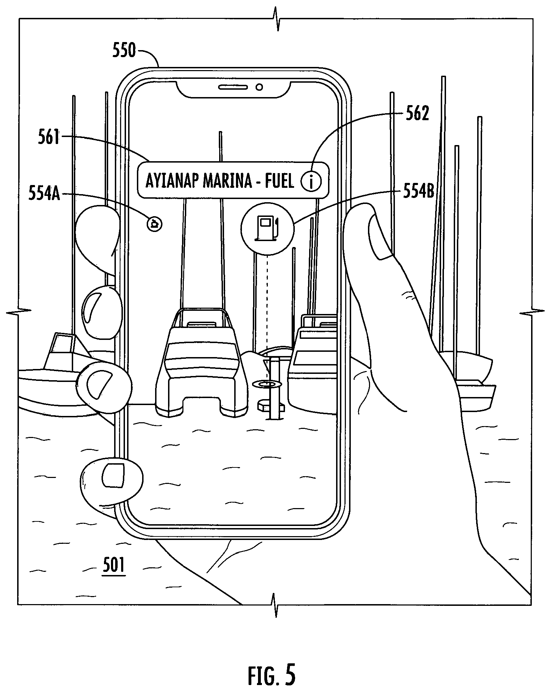

In some embodiments, multiple locations of interest may be identified at a single time, and FIG. 5 illustrates an example of this that does not correspond to the claimed invention. In FIG. 5, a first icon 554A and a second icon 554B are presented. The first icon 554A includes a coffee symbol to indicate the location of a coffee shop, and the second icon 554B includes a gas pump symbol to indicate the location of a fueling station. While the smart phone 550 is directed partially at the body of water 501, it is also directed towards inland locations. Unlike the examples illustrated in FIGS. 2A-2C and FIG. 4, both of the locations of interest in FIG. 5 are located on land, according to an embodiment that is not part of the claimed invention. The second icon 554B is presented with a larger size than the first icon 554A in FIG. 5, and this may be because the fueling station associated with the second icon 554B is closer to the smart phone 550 and/or the watercraft than the coffee shop associated with the first icon 554A. Alternatively, the second icon 554B may be provided with an enlarged size due to an increased importance of the location of interest type. Additionally, a label 561 and information button 562 are provided for the fueling station, but no label or information button are provided for the coffee shop - these features may be omitted for the fueling station due to the more distant location of the coffee shop than the fueling station, but these may also be omitted based on settings set by the user or for other reasons such as a lower importance level of the second icon 554B.

The types of locations of interest that are highlighted for a user may be different for each user. For example, the types that are highlighted for the user may be adjusted based on information received about the user. For example, where the user indicates that he or she is using the watercraft for fishing, then the types that are highlighted may be different than if the user indicates that he or she is using the watercraft for water skiing or for other purposes. Information may be manually input by the user in settings or received in other ways. In some embodiments, the user may adjust the types of locations of interest that it would like to see highlighted in settings, and this may be adjusted from time to time during use of the system. By adjusting the types that are presented, the user may beneficially customize the augmented reality images as the user wishes.

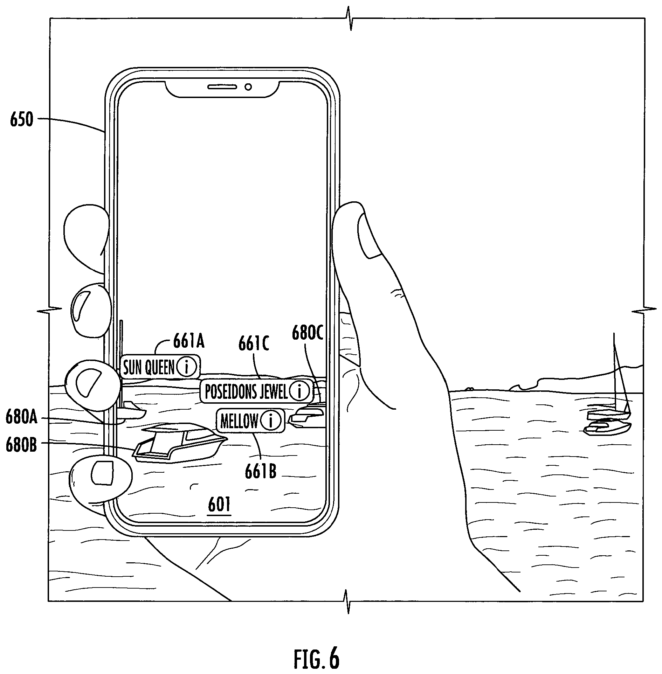

Augmented reality techniques may also be utilized to overlay information about various watercraft or other objects on the surface of a body of water 601. For example, in FIG. 6, an example smart phone 650 is illustrated that is presenting an augmented reality image on a display of the smart phone 650 with multiple locations of interest identified thereon in the form of other watercraft. A first watercraft 680A and an associated first label 661A are illustrated, a second watercraft 680B and an associated second label 661B are illustrated, and a third watercraft 680C and an associated third label 661C are illustrated. The labels 661A, 661B, 661C each include the name of the associated watercraft, and the labels 661A, 661B, 661C each include an information button similar to the information button 262 of FIG. 2A. The labels 661A, 661B, 661C are presented on the display of the smart phone 650 in various positions relative to the associated watercraft so that the labels and the watercraft do not interfere with each other. For example, the first label 661A is presented above and to the right of the first watercraft 680A in the image, the second label 661B is presented slightly above and to the right of the second watercraft 680B, and the third label 661C is presented above and to the left of the third watercraft 680C.

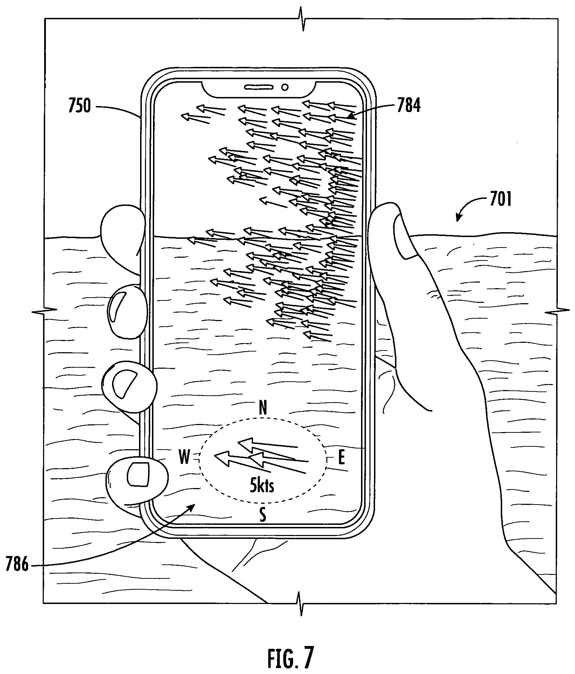

Other items may be presented on the display of an electronic device to provide users with information about the environment around a watercraft. For example, information about the wind speed may be presented to the user. FIG. 7 illustrates an example smart phone 750 presenting an augmented reality image on a display of the smart phone with a graphical representation of the wind speed overlayed on the augmented reality image. The graphical representation of the wind speed is provided in the form of arrows 784, and these arrows 784 are overlayed on the image to indicate the magnitude and direction of the wind speed as well as the locations where wind speeds are high or low. Additionally, a representation 786 is also overlayed on the image. The representation 786 indicates the direction of the wind speed relative to north, east, west, and south directions. The representation 786 also includes a numerical representation of the wind speed, which may be the average wind speed within a specified volume around the smart phone 750. The camera of the smart phone 750 is oriented towards the body of water 701, and the arrows 784 and the representation 786 may enable even novice users to better understand the wind speed features around the watercraft. The arrows 784 and the representation 786 may be beneficially used for navigating a sailboat or for other applications. While FIG. 7 provides arrows 784 to show the wind speed, arrows may additionally or alternatively be presented at the body of water 701 to provide further information about the water current in the body of water.

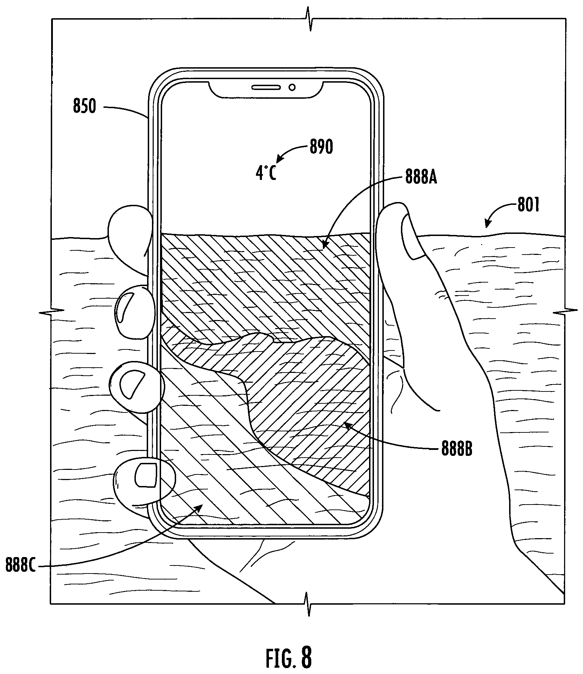

Representations of the temperature of the water may also be presented on a smart phone or another electronic device, and FIG. 8 illustrates an example of this. A smart phone 850 is illustrated presenting an augmented reality image thereon. The augmented reality image includes a graphical representation of the water temperature at various areas on a surface of the body of water 801, and these graphical representations are overlayed on the augmented reality image. A first area 888A may be represented with a first color or pattern, a second area 888B may be represented with a second color or pattern, and a third area 888C may be represented with a third color or pattern. The first area 888A, the second area 888B, and the third area 888C are each presented on the surface of the body of water 801. A temperature indication 890 is also illustrated to show that the temperature is approximately four degrees Celsius in the first area 888A. However, in other embodiments, temperature indications may be provided for each of the areas 888A, 888B, 888C. By using the augmented reality image in FIG. 8 to show representations of the temperature of the water, even novice users may navigate to positions in the body of water 801 where the temperature is the temperature that the user is seeking. This may be beneficial for those who are fishing and for other users.

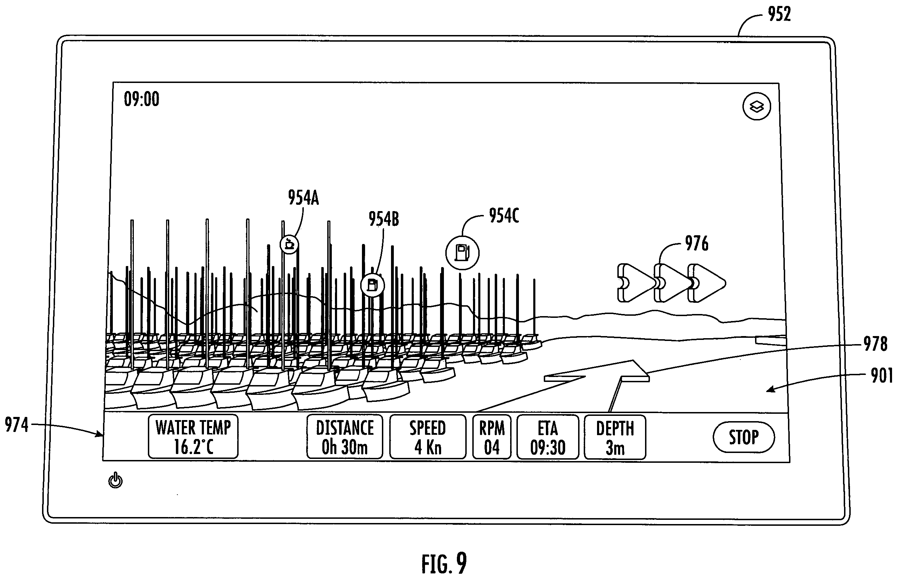

Looking now at FIG. 9, another example, not according to the claimed invention, of a display is provided where multiple locations of interest are identified. In FIG. 9, a first icon 954A, a second icon 954B, and a third icon 954C are illustrated. The first icon 954A includes a coffee symbol to indicate the location of a coffee shop, and both the second icon 954B and the third icon 954C include a gas pump symbol to indicate the location of a fueling station. The camera used to generate the image presented on the display 952 is directed partially at the body of water 901, but it is also directed towards inland locations where each of the locations of interest represented by the first icon 954A, the second icon 954B, and the third icon 954C are located. Similar to FIG. 5, the icons may be presented in differing sizes to indicate the importance and/or proximity of the location of interest from the user.

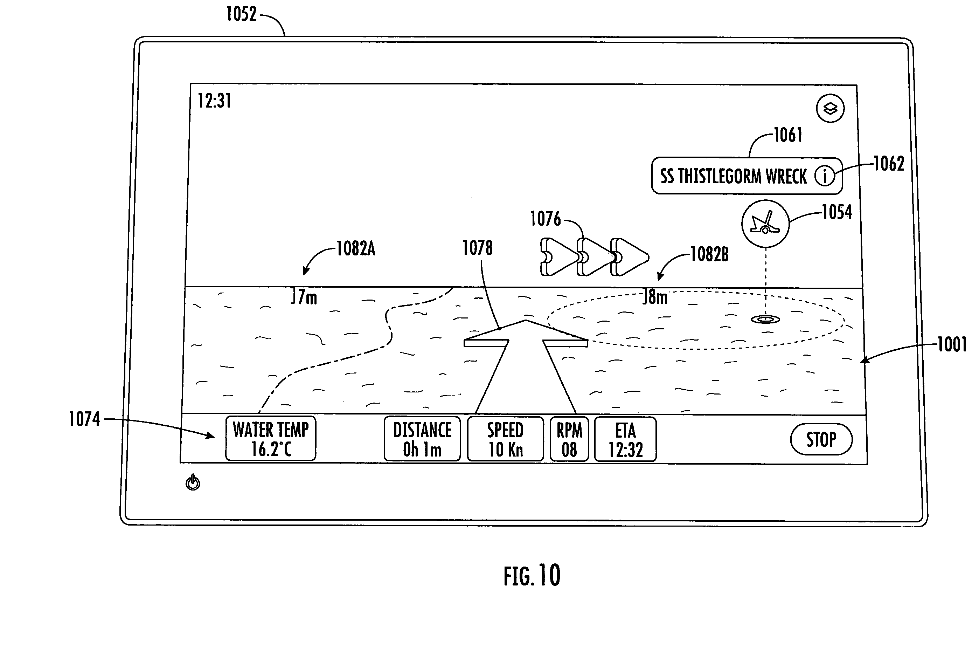

The icons 954A, 954B, 954C may be overlayed onto a live image on the display 952 while the display 952 is presenting other information such as navigational information to the user. The display 952 comprises an information bar 974, and this information bar 974 presents information about the current water temperature, which may be received from temperature sensor *112 (see* FIG. 1) or from some other source. The information bar 974 also illustrates other navigational information in the form of an expected time until the destination is reached, a watercraft speed, an estimated time of arrival, rotations per minute for the motor, and a water depth at current location relative to some other location. A heading direction representation 978 is presented on the display to represent the current heading direction of the watercraft, and the indicator 976 presents recommended navigational guidance to rotate the watercraft to reach the destination. In some embodiments, the indicator 976 may be utilized to present recommended navigational guidance to a location of interest represented by one of the icons 954A, 954B, 954C. An example of this is illustrated in FIG. 10.

FIG. 10 illustrates an example display 1052 of a marine electronic device where the camera providing the image used on the display 1052 is directed towards the body of water 1001. The augmented reality image is presented on the display 1052 with a location of interest represented by icon 1054. The icon 1054 includes a symbol of a shipwreck, and a label 1061 having an information button 1062 is provided above the icon 1054. The icon 1054, the label 1061, and the information button 1062 may be similar to other icons, labels, and information buttons described herein. The heading direction representation 1078 is represented on the display 1052, and the indicator 1076 provides navigational guidance to rotate the watercraft from the current heading direction to reach the location of interest. The indicator 1076 may beneficially present guidance to the user on the display 1052 in such a manner that permits even a novice user to easily navigate to a location of interest. Additionally, the display 1052 illustrates a first water depth representation 1082A and a second water depth representation 1082B. The first water depth representation 1082A indicates that the water depth is approximately 7 meters towards the left, and the second water depth representation 1082B indicates that the water depth is approximately 8 meters towards the right. Water depth representations may be presented at locations where shallow waters are present in some embodiments, but water depth representations may also be provided at other locations. An information bar 1074 is also presented on the bottom that presents the water temperature at the watercraft, the time until the destination is reached, the speed of the watercraft, the number of revolutions per minute for an engine, and the estimated time of arrival.

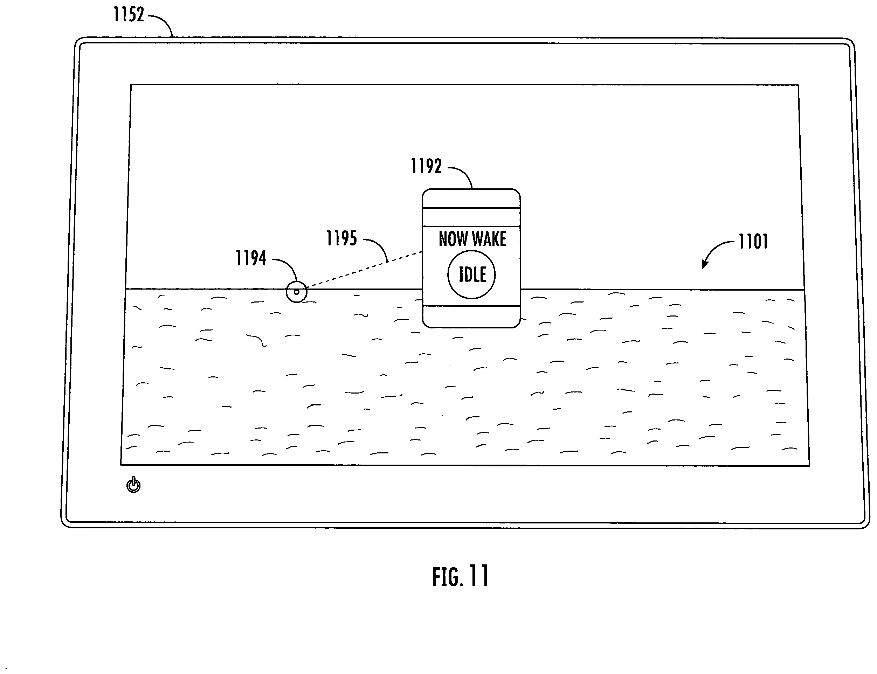

Another location of interest that may be identified in an augmented reality image is a buoy. FIG. 11 illustrates a display 1152 where a buoy is identified thereon. An enlarged buoy representation 1192 is presented on the display 1152, and a line 1195 extends from this enlarged buoy representation 1192 to the location identifier 1194. The location identifier 1194 may be a circle that is provided at or around the actual location of the buoy in the body of water 1101. This may beneficially enable the buoy to be identified for the user while still permitting the user to see the live image. In some embodiments, the user may tap the location identifier 1194 to cause the enlarged buoy representation 1192 to appear, and the user may tap at the location identifier 1194 or another location on the screen of the display 1152 to cause the enlarged buoy representation 1192 to be removed from the display 1152. In some embodiments, multiple location identifiers 1194 may be presented in an augmented reality image. While location identifiers 1194 are shown without associated icons, an icon may be associated with the location identifier 1194 in other embodiments. In some embodiments, location identifiers 1194 may be utilized for items or locations of interest that are at distant locations or that are considered to be of lower importance.

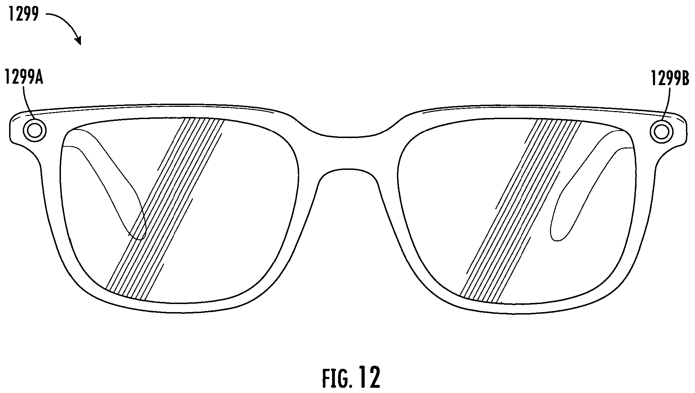

Another electronic device that may be utilized to present an augmented reality image are the smart glasses 1299 illustrated in FIG. 12. The smart glasses 1299 include a first camera 1299A on one side of the smart glasses 1299 and a second camera 1299B on the second side of the smart glasses 1299. However, only one camera may be provided in other embodiments, or three or more cameras may be utilized. Camera(s) may also be positioned in other locations. The cameras 1299A, 1299B are configured to generate images of the environment, and these images may be utilized to form an augmented reality image that are presented on the lenses of the glasses.

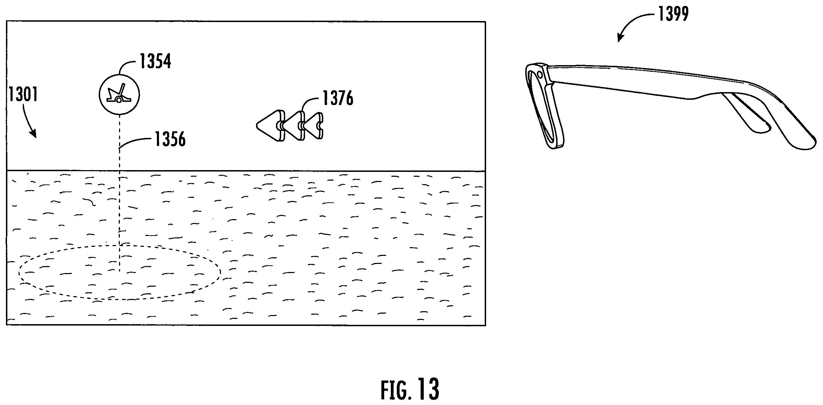

The augmented reality images presented on the smart glasses 1299 may be similar to the other augmented reality images that are presented on the smart phone and the displays illustrated in the figures and described herein. The lenses of the smart glasses 1299 may serve as the display in the smart glasses 1299. For example, FIG. 13 illustrates a schematic view illustrating smart glasses 1399 in use. The user may wear the smart glasses 1299 and look towards the body of water 1301. The location of interest may be identified and represented by the icon 1354, and a line 1356 may extend downwardly from the icon 1354 to the surface of the body of water 1301. Additionally, an indicator 1376 is presented, and this indicator 1376 may present navigational guidance to the user so that the user may reach the location of interest.

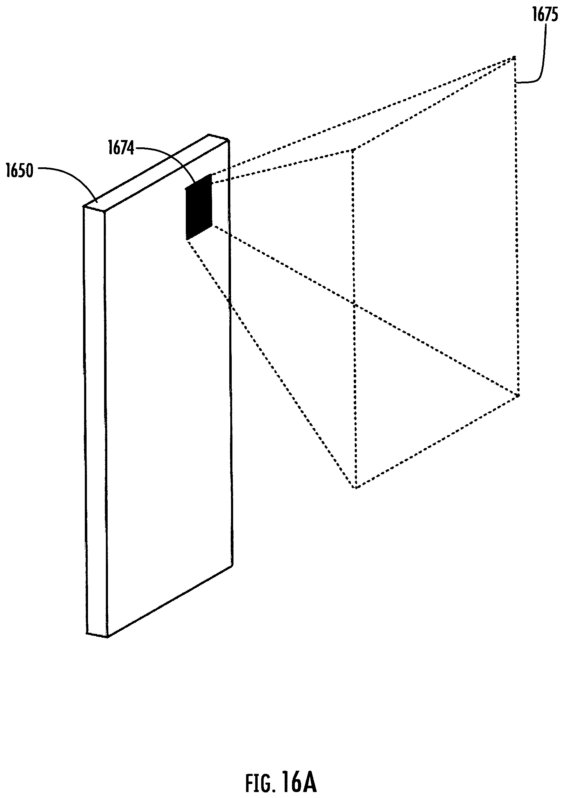

The camera on a smart phone or another electronic device may be configured to generate images for a specific field of view, and a location of interest or a representation for the location of interest that is within the field of view may be identified. Looking ahead to FIG. 16A, schematic views are provided illustrating the field of view 1675 of a camera 1674 on a smart phone 1650. The field of view 1675 is illustrated in the shape of a rectangular pyramid, but the field of view 1675 may be provided in other shapes. The shape of the field of view 1675 may be dependent upon the shape of the camera 1674 and/or the shape of the display on the camera 1674. In some embodiments, the field of view 1675 may be increased or decreased in size. For example, where the user enters a command to zoom in at the smart phone 1650, the field of view 1675 may decrease in size, and where the user enters a command to zoom out on the smart phone 1650, the field of view 1675 may increase in size.

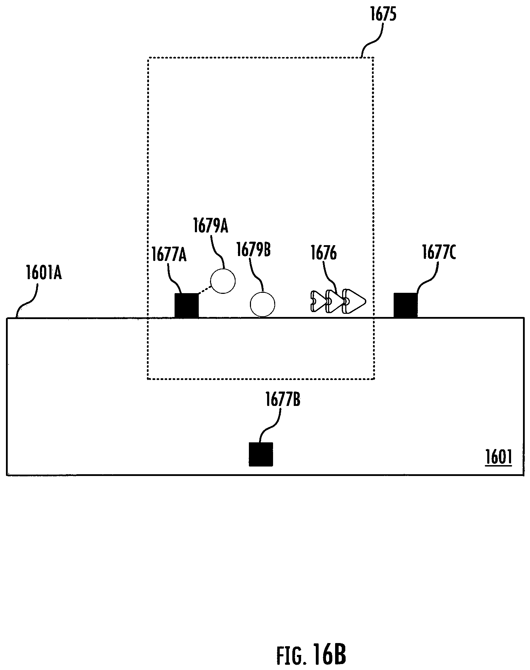

FIG. 16B is a schematic view illustrating various locations of interest 1677A, 1677B, 1677C at different positions relative to the field of view 1675 generated by the camera 1674 of FIG. 16A. The first location of interest 1677A is positioned at the surface 1601A of the body of water 1601, and the first location of interest 1677A is within the field of view 1675. A first representation 1679A is associated with the first location of interest 1677A, and the first representation 1679A may be presented in an augmented reality image on the display proximate to the first location of interest 1677A.

The second location of interest 1677B is positioned underneath the surface 1601A of the body of water 1601, and the second location of interest 1677B falls below the field of view 1675. However, a location on the surface 1601A of the body of water 1601 that is directly above the second location of interest 1677B does fall within the field of view 1675. Where this is the case, the second representation 1679B may be presented in an augmented reality image on the display proximate to the location on the surface 1601A of the body of water 1601 that is directly above the second location of interest 1677B.

The third location of interest 1677C is positioned at the surface 1601A of the body of water 1601 and is positioned outside of the field of view 1675. Where this is the case, no representation for the third location of interest 1677C is included in an augmented reality image on the display as illustrated in FIG. 16B.

For the third location of interest 1677C, an indicator 1676 may present guidance to the user so that the user may navigate to or view the location of interest 1677C. Upon seeing the indicator 1676, the user may rotate the smart phone 1650 so that the third location of interest 1677C is positioned within the field of view 1675. This indicator 1676 may be presented in the augmented reality image where the third location of interest is in close proximity to the field of view 1675 or where the third location of interest 1677C is particularly important.

The watercraft may have systems thereon including various electrical components, and FIG. 14 is a block diagram illustrating electrical components that may be provided on in one example system. The system 1400 may comprise numerous marine devices. As shown in FIG. 14, a sonar transducer assembly 1462, a radar 1456A, a rudder 1457, a primary motor 1405, a trolling motor 1408, and additional sensors/devices 1464 may be provided as marine devices, but other marine devices may also be provided. One or more marine devices may be implemented on the marine electronic device 1460 as well. For example, a position sensor 1445, a direction sensor 1448, an autopilot 1450, a GNSS sensor 1421, and other sensors/devices 1452 may be provided within the marine electronic device 1460. These marine devices can be integrated within the marine electronic device 1460, integrated on a watercraft at another location and connected to the marine electronic device 1460, and/or the marine devices may be implemented at a remote device 1454 in some embodiments. For example, the GNSS receiver 1421, may be positioned at another location on a watercraft outside of the marine electronic device 1460. The system 1400 may include any number of different systems, modules, or components; each of which may comprise any device or means embodied in either hardware, software, or a combination of hardware and software configured to perform one or more corresponding functions described herein.

The marine electronic device 1460 may include at least one processor 1410, a memory 1420, a communications interface 1478, a user interface 1435, a display 1440, autopilot 1450, and one or more sensors (e.g. position sensor 1445, direction sensor 1448, other sensors/devices 1452). One or more of the components of the marine electronic device 1460 may be located within a housing or could be separated into multiple different housings (e.g., be remotely located).

The processor(s) 1410 may be any means configured to execute various programmed operations or instructions stored in a memory device (e.g., memory 1420) such as a device or circuitry operating in accordance with software or otherwise embodied in hardware or a combination of hardware and software (e.g. a processor operating under software control or the processor embodied as an application specific integrated circuit (ASIC) or field programmable gate array (FPGA) specifically configured to perform the operations described herein, or a combination thereof) thereby configuring the device or circuitry to perform the corresponding functions of the processor(s) 1410 as described herein.

In an example embodiment, the memory 1420 may include one or more non-transitory storage or memory devices such as, for example, volatile and/or non-volatile memory that may be either fixed or removable. The memory 1420 may be configured to store instructions, computer program code, radar data, and additional data such as sonar data, chart data, location/position data in a non-transitory computer readable medium for use, such as by the processor(s) 1410 for enabling the marine electronic device 1460 to carry out various functions in accordance with example embodiments of the present invention. For example, the memory 1420 could be configured to buffer input data for processing by the processor(s) 1410. Additionally or alternatively, the memory 1420 could be configured to store instructions for execution by the processor(s) 1410. The memory 1420 may include computer program code that is configured to, when executed, cause the processor(s) 1410 to perform various methods described herein. The memory 1420 may serve as a non-transitory computer readable medium having stored thereon software instructions that, when executed by a processor, cause methods described herein to be performed.

The communications interface 1478 may be configured to enable communication to external systems (e.g. an external network 1402). In this manner, the marine electronic device 1460 may retrieve stored data from a remote device 1454 via the external network 1402 in addition to or as an alternative to the onboard memory 1420. Additionally or alternatively, the marine electronic device 1460 may transmit or receive data, such as radar signal data, radar return data, radar image data, path data or the like to or from a sonar transducer assembly 1462. In some embodiments, the marine electronic device 1460 may also be configured to communicate with other devices or systems (such as through the external network 1402 or through other communication networks, such as described herein). For example, the marine electronic device 1460 may communicate with a propulsion system of the watercraft 100 (e.g., for autopilot control); a remote device (e.g., a user's mobile device, a handheld remote, etc.); or another system.

The communications interface 1478 of the marine electronic device 1460 may also include one or more communications modules configured to communicate with one another in any of a number of different manners including, for example, via a network. In this regard, the communications interface 1478 may include any of a number of different communication backbones or frameworks including, for example, Ethernet, the NMEA 2000 framework, GPS, cellular, Wi-Fi, or other suitable networks. The network may also support other data sources, including GPS, autopilot, engine data, compass, radar, etc. In this regard, numerous other peripheral devices (including other marine electronic devices or transducer assemblies) may be included in the system 1400.

The position sensor 1445 may be configured to determine the current position and/or location of the marine electronic device 1460 (and/or the watercraft 100). For example, the position sensor 1445 may comprise a GPS, bottom contour, inertial navigation system, such as machined electromagnetic sensor (MEMS), a ring laser gyroscope, or other location detection system. Alternatively or in addition to determining the location of the marine electronic device 1460 or the watercraft 100, the position sensor 1445 may also be configured to determine the position and/or orientation of an object outside of the watercraft 100.

The display 1440 (e.g. one or more screens) may be configured to present images and may include or otherwise be in communication with a user interface 1435 configured to receive input from a user. The display 1440 may be, for example, a conventional LCD (liquid crystal display), a touch screen display, mobile device, or any other suitable display known in the art upon which images may be displayed.

In some embodiments, the display 1440 may present one or more sets of data (or images generated from the one or more sets of data). Such data includes chart data, radar data, sonar data, weather data, location data, position data, orientation data, sonar data, or any other type of information relevant to the watercraft. Radar data may be received from radar 1456A located outside of a marine electronic device 1460, radar 1456B located in a marine electronic device 1460, or from radar devices positioned at other locations, such as remote from the watercraft. Additional data may be received from marine devices such as a sonar transducer assembly 1462, a primary motor 1405 or an associated sensor, a trolling motor 1408 or an associated sensor, an autopilot 1450, a rudder 1457 or an associated sensor, a position sensor 1445, a direction sensor 1448, other sensors/devices 1452, a remote device 1454, onboard memory 1420 (e.g., stored chart data, historical data, etc.), or other devices.

The user interface 1435 may include, for example, a keyboard, keypad, function keys, buttons, a mouse, a scrolling device, input/output ports, a touch screen, or any other mechanism by which a user may interface with the system.

Although the display 1440 of FIG. 14 is shown as being directly connected to the processor(s) 1410 and within the marine electronic device 1460, the display 1440 could alternatively be remote from the processor(s) 1410 and/or marine electronic device 1460. Likewise, in some embodiments, the position sensor 1445 and/or user interface 1435 could be remote from the marine electronic device 1460.

The marine electronic device 1460 may include one or more other sensors/devices 1452, such as configured to measure or sense various other conditions. The other sensors/devices 1452 may include, for example, an air temperature sensor, a water temperature sensor, a current sensor, a light sensor, a wind sensor, a speed sensor, or the like.

A sonar transducer assembly 1462 is also provided in the system 1400. The sonar transducer assembly 1462 illustrated in FIG. 14 may include one or more sonar transducer elements 1467, such as may be arranged to operate alone or in one or more transducer arrays. In some embodiments, additional separate sonar transducer elements (arranged to operate alone, in an array, or otherwise) may be included. As indicated herein, the sonar transducer assembly 1462 may also include a sonar signal processor or other processor (although not shown) configured to perform various sonar processing. In some embodiments, the processor (e.g., processor(s) 1410 in the marine electronic device 1460, a controller (or processor portion) in the sonar transducer assembly 1462, or a remote controller - or combinations thereof) may be configured to filter sonar return data and/or selectively control sonar transducer element(s) 1467. For example, various processing devices (e.g., a multiplexer, a spectrum analyzer, A-to-D converter, etc.) may be utilized in controlling or filtering sonar return data and/or transmission of sonar signals from the sonar transducer element(s) 1467. The processor(s) 1410 may also be configured to filter data regarding certain objects out of map data.

The sonar transducer assembly 1462 may also include one or more other systems, such as various sensor(s) 1466. For example, the sonar transducer assembly 1462 may include an orientation sensor, such as gyroscope or other orientation sensor (e.g., accelerometer, MEMS, etc.) that can be configured to determine the relative orientation of the sonar transducer assembly 1462 and/or the one or more sonar transducer element(s) 1467 - such as with respect to a forward direction of the watercraft. In some embodiments, additionally or alternatively, other types of sensor(s) are contemplated, such as, for example, a water temperature sensor, a current sensor, a light sensor, a wind sensor, a speed sensor, or the like. While only one sonar transducer assembly 1462 is illustrated in FIG. 14, additional sonar transducer assemblies may be provided in other embodiments.

An electronic device 1468 is also included. The electronic device 1468 may be a phone such as a smart phone, smart glasses, a display, a tablet, a computer, a headset, or another electronic device. The electronic device 1468 comprises a display 1470, with the display 1470 having a screen. In some embodiments, the display 1470 may be a touch display that is configured to receive input from a user by detecting the user touching the display 1470 with a finger. A user interface 1472 is also provided in the electronic device 1468, and the user interface 1472 may include one or more input buttons, a speaker, a microphone, a keypad, and other mechanisms to enable the user to input commands. The electronic device 1468 may also comprise a camera 1474B to obtain one or more images, which may be live images. The electronic device 1468 may also comprise an orientation sensor 1476B. The orientation sensor 1476B may be configured to determine the orientation at the camera 1474B. Alternatively, a camera 1474A and an associated orientation sensor 1476A may be positioned at another location on the watercraft, with the orientation sensor 1476A being configured to determine the orientation at the camera 1474A.

The components presented in FIG. 14 may be rearranged to alter the connections between components. For example, in some embodiments, a marine device outside of the marine electronic device 1460, such as the radar 1456A, may be directly connected to the processor(s) 1410 rather than being connected to the communications interface 1478. Additionally, sensors and devices implemented within the marine electronic device 1460 may be directly connected to the communications interface in some embodiments rather than being directly connected to the processor(s) 1410.

Various methods are also contemplated for the generation of augmented reality images, and FIG. 15 is an example of one such method 1500. At operation 1502, location information and orientation information are received. This location information and orientation information may be received for the electronic device or for the watercraft. This location information may be received from the position sensor 1445 or a similar sensor in the electronic device 1468, and the orientation information may be received from the orientation sensor 1476A or the orientation sensor 1476B. At operation 1504, presentation of an image of an environment around the watercraft is caused. This image may be created from a camera on the electronic device or a camera on the watercraft. At operation 1506, a first location of interest is identified that is within the field of view for the camera. In some embodiments, a first location of interest may be identified at operation 1506 where the location of interest falls outside of the field of view but where a representation associated with the first location of interest falls within the field of view for the camera. At operation 1508, a representation of the first location of interest is overlayed on the image of the environment around the watercraft. At operation 1510, a second location of interest may be identified that is within the field of view for the camera. At operation 1512, a representation of the second location of interest is overlayed on the image of the environment around the watercraft. At operation 1514, an input is received requesting further information about the first location of interest. This input may be received where a user selects an icon, a label, or an information button associated with a location of interest. At operation 1516, presentation of additional information about the first location of interest is caused. At operation 1518, representation of distance information for the location of interest may be caused, an indicator may be presented that provides navigational guidance as to how to reach the location of interest, and/or presentation of an environmental indication on the display may be caused, with the environmental indication being related to an environmental condition such as the wind speed, the current, the water temperature, the air temperature, or the water depth.

In some embodiments, the method 1500 may be executed by a processor and may be stored as software instructions and/or computer program code in a non-transitory computer readable medium and/or memory. However, the method 1500 may be performed by a wide variety of items. Additionally, the operations of method 1500 may be performed in various orders, and some of the operations may be performed simultaneously in some embodiments. Some of the operations of method 1500 may not be performed in some embodiments - for example, in some embodiments of the method 1500, operations 1510, 1512, and 1518 may not be performed. In some embodiments, additional operations may be included in the method 1500. For example, additional locations of interest may be identified and represented on the image.

FIG. 15 illustrates a flowchart of a system, method, and computer program product according to an example embodiment. It will be understood that each block of the flowcharts, and combinations of blocks in the flowcharts, may be implemented by various means, such as hardware and/or a computer program product comprising one or more computer-readable mediums having computer readable program instructions stored thereon. For example, one or more of the procedures described herein may be embodied by computer program instructions of a computer program product. In this regard, the computer program product(s) which embody the procedures described herein may be stored by, for example, the memory 1420 *(see* FIG. 14) and executed by, for example, the processor 1410 *(see* FIG. 14). Alternatively, the computer program product(s) which embody the procedures described herein may be stored by, for example, memory in an electronic device 1468 or at another location and executed by, for example, a processor in the electronic device 1468 or in another location. As will be appreciated, any such computer program product may be loaded onto a computer or other programmable apparatus (for example, a marine electronic device 1460 *(see* FIG. 14)) to produce a machine, such that the computer program product including the instructions which execute on the computer or other programmable apparatus creates means for implementing the functions specified in the flowchart block(s). Further, the computer program product may comprise one or more non-transitory computer-readable mediums on which the computer program instructions may be stored such that the one or more computer-readable memories can direct a computer or other programmable device (for example, a marine electronic device 1460) to cause a series of operations to be performed on the computer or other programmable apparatus to produce a computer-implemented process such that the instructions which execute on the computer or other programmable apparatus implement the functions specified in the flowchart block(s).

## Claims

1. A system for overlaying a representation of a location of interest on an image of an environment around a watercraft (100), the system comprising:
an electronic device (1460) having a display (1440);
at least one processor (1410);
a camera (1474B);
a memory (1420) having stored thereon software instructions that, when executed by the at least one processor, cause the at least one processor to:
receive location information and orientation information for the electronic device or the watercraft;
cause, based on camera data received from the camera, presentation of the image (1679A) of the environment around the watercraft;
determine a field of view (1675) for the camera that includes the environment around the watercraft within the image;
identify a location of interest (1677B) or a representation for the location of interest that corresponds to the field of view, wherein the location of interest is underneath water;
cause the representation (1679B), on the display, of the location of interest (1677B) to be overlayed onto the image at a position above the water at the location in the field of view so as to generate an augmented reality image;
receive an input requesting further information for the location of interest; and
cause presentation, on the display, of additional information about the location of interest at the position above the water at the location in the field of view, wherein the additional information is a second image of the location of interest, wherein the second image is an underwater image.

2. The system of Claim 1, wherein the representation comprises a symbol of the location of interest.

3. The system of Claim 1, wherein the location of interest (1677B) is at least one of an underwater wreck, an underwater reef, a dumping ground, or an animal.

4. The system of Claim 1, wherein the second image (1679B) is a sonar image of the location of interest.

5. The system of Claim 1, wherein the software instructions, when executed by the at least one processor, cause the at least one processor to:
identify a second location of interest that is within the field of view (1675); and
cause a second representation of the second location of interest to be overlayed onto the image.

6. The system of Claim 1, wherein the software instructions, when executed by the at least one processor, cause the at least one processor to:
present distance information for the location of interest.

7. The system of Claim 1, wherein the software instructions, when executed by the at least one processor, cause the at least one processor to:
present an indicator on the display, wherein the indicator provides navigational guidance as to how to reach the location of interest.

8. The system of Claim 1, wherein the software instructions, when executed by the at least one processor, cause the at least one processor to:
present an environmental indication on the display,
wherein the environmental indication is related to an environmental condition, wherein the environmental condition is at least one of a wind speed, current, water temperature, or water depth.

9. The system of Claim 1, wherein the electronic device is a phone, a tablet, a computer, smart glasses, or a headset.

10. The system of Claim 1, wherein the camera is provided in the electronic device.

11. A method for overlaying a representation of a location of interest on an image of an environment around a watercraft (100), the method comprising:
receiving location information and orientation information for the electronic device (1460) or the watercraft;
causing, based on camera data received from the camera (1474B), presentation of the image of the environment around the watercraft;
determining a field of view (1675) for the camera that includes the environment around the watercraft within the image;
identifying a location of interest (1677B) or a representation for the location of interest that corresponds to the field of view, wherein the location of interest is underneath water;
causing the representation (1679B) of the location of interest to be overlayed onto the image at a position above the water at the location in the field of view so as to generate an augmented reality image;
receiving an input requesting further information for the location of interest; and
causing presentation of additional information about the location of interest at the position above the water at the location in the field of view, wherein the additional information is a second image of the location of interest, wherein the second image is an underwater image.

12. The method of Claim 11, further comprising:
identifying a second location of interest that is within the field of view; and
causing a second representation of the second location of interest to be overlayed onto the image.

13. The method of Claim 12, further comprising:
presenting distance information for the location of interest.

14. The method of Claim 13, further comprising:
presenting an indicator on the display, wherein the indicator provides navigational guidance as to how to reach the location of interest.

15. The method of Claim 14, further comprising:
presenting an environmental indication on the display,
wherein the environmental indication is related to an environmental condition, wherein the environmental condition is at least one of a wind speed, current, water temperature, or water depth.

## Patentansprüche

1. System zur Überlagerung einer Darstellung einer Zielposition auf ein Bild einer Umgebung im Umkreis eines Wasserfahrzeugs (100), wobei das System Folgendes umfasst:
eine elektronische Vorrichtung (1460), aufweisend eine Anzeige (1440);
mindestens einen Prozessor (1410);
eine Kamera (1474B);
einen Speicher (1420), auf dem Softwareanweisungen gespeichert sind, die, wenn sie von dem mindestens einen Prozessor ausgeführt werden, bewirken, dass der mindestens eine Prozessor:
Positionsinformationen und Orientierungsinformationen für die elektronische Vorrichtung oder das Wasserfahrzeug empfängt;
basierend auf von der Kamera empfangenen Kameradaten eine Präsentation des Bilds (1679A) der Umgebung im Umkreis des Wasserfahrzeugs bewirkt;
ein Sichtfeld (1675) für die Kamera bestimmt, das die Umgebung im Umkreis des Wasserfahrzeugs innerhalb des Bilds beinhaltet;
eine Zielposition (1677B) oder eine Darstellung für die Zielposition identifiziert, die dem Sichtfeld entspricht, wobei die Zielposition unter Wasser ist;
die Darstellung (1679B) der auf das Bild zu überlagernden Zielposition (1677B) an einer Lage über dem Wasser an der Position in dem Sichtfeld bewirkt, sodass ein Bild der erweiterten Realität generiert wird;
eine Eingabe empfängt, mit der weitere Informationen für die Zielposition angefordert werden, und
auf der Anzeige eine Präsentation zusätzlicher Informationen über die Zielposition an der Lage über dem Wasser an der Position in dem Sichtfeld bewirkt, wobei es sich bei den zusätzlichen Informationen um ein zweites Bild der Zielposition handelt, wobei das zweite Bild ein Unterwasserbild ist.

2. System nach Anspruch 1, wobei die Darstellung ein Symbol der Zielposition umfasst.

3. System nach Anspruch 1, wobei es sich bei der Zielposition (1677B) mindestens um eines der folgenden Objekte handelt: ein Unterwasserwrack, ein Unterwasserriff, eine Ablagerungsstelle oder ein Tier.

4. System nach Anspruch 1, wobei das zweite Bild (1679B) ein Sonarbild der Zielposition ist.

5. System nach Anspruch 1, wobei die Softwareanweisungen, wenn sie von dem mindestens einen Prozessor ausgeführt werden, bewirken, dass der mindestens eine Prozessor:
eine zweite Zielposition identifiziert, die sich innerhalb des Sichtfelds (1675) befindet, und
eine zweite Darstellung der zweiten, auf das Bild zu überlagernden Zielposition bewirkt.

6. System nach Anspruch 1, wobei die Softwareanweisungen, wenn sie von dem mindestens einen Prozessor ausgeführt werden, bewirken, dass der mindestens eine Prozessor:
Entfernungsinformationen für die Zielposition präsentiert.

7. System nach Anspruch 1, wobei die Softwareanweisungen, wenn sie von dem mindestens einen Prozessor ausgeführt werden, bewirken, dass der mindestens eine Prozessor:
auf der Anzeige einen Hinweis präsentiert, wobei der Hinweis eine Navigationshilfe zum Erreichen der Zielposition bereitstellt.

8. System nach Anspruch 1, wobei die Softwareanweisungen, wenn sie von dem mindestens einen Prozessor ausgeführt werden, bewirken, dass der mindestens eine Prozessor:
auf der Anzeige eine Umgebungsangabe präsentiert,
wobei sich die Umgebungsangabe auf einen Umgebungszustand bezieht, wobei der Umgebungszustand mindestens eine der folgenden Größen ist: Windgeschwindigkeit, Strömung, Wassertemperatur oder Wassertiefe.

9. System nach Anspruch 1, wobei es sich bei der elektronischen Vorrichtung um ein Smartphone, ein Tablet, einen Computer, eine Datenbrille oder ein Headset handelt.

10. System nach Anspruch 1, wobei die Kamera in dem elektronischen Gerät vorgesehen ist.

11. Verfahren zur Überlagerung einer Darstellung einer Zielposition auf ein Bild einer Umgebung im Umkreis eines Wasserfahrzeugs (100), wobei das Verfahren Folgendes umfasst:
Empfangen von Positionsinformationen und Orientierungsinformationen für die elektronische Vorrichtung (1460) oder das Wasserfahrzeug;
Bewirken einer Präsentation des Bilds der Umgebung im Umkreis des Wasserfahrzeugs basierend auf von der Kamera (1474B) empfangenen Kameradaten;
Bestimmen eines Sichtfelds (1675) für die Kamera, das die Umgebung im Umkreis des Wasserfahrzeugs innerhalb des Bilds beinhaltet;
Identifizieren einer Zielposition (1677B) oder einer Darstellung für die Zielposition, die dem Sichtfeld entspricht, wobei die Zielposition unter Wasser ist;
Bewirken der Darstellung (1679B) der auf das Bild zu überlagernden Zielposition an einer Lage über dem Wasser an der Position in dem Sichtfeld, sodass ein Bild der erweiterten Realität generiert wird;
Empfangen einer Eingabe, mit der weitere Informationen für die Zielposition angefordert werden, und
Bewirken einer Präsentation zusätzlicher Informationen über die Zielposition an der Lage über dem Wasser an der Position in dem Sichtfeld, wobei es sich bei den zusätzlichen Informationen um ein zweites Bild der Zielposition handelt, wobei das zweite Bild ein Unterwasserbild ist.

12. Verfahren nach Anspruch 11, ferner umfassend:
Identifizieren einer zweiten Zielposition, die sich innerhalb des Sichtfelds befindet, und
Bewirken einer zweiten Darstellung der zweiten, auf das Bild zu überlagernden Zielposition.

13. Verfahren nach Anspruch 12, ferner umfassend:
Präsentieren von Entfernungsinformationen für die Zielposition.

14. Verfahren nach Anspruch 13, ferner umfassend:
Präsentieren eines Hinweises auf der Anzeige, wobei der Hinweis eine Navigationshilfe zum Erreichen der Zielposition bereitstellt.

15. Verfahren nach Anspruch 14, ferner umfassend:
Präsentieren einer Umgebungsangabe auf der Anzeige.
wobei sich die Umgebungsangabe auf einen Umgebungszustand bezieht, wobei der Umgebungszustand mindestens eine der folgenden Größen ist: Windgeschwindigkeit, Strömung, Wassertemperatur oder Wassertiefe.

## Revendications

1. Système pour la superposition d'une représentation d'un emplacement d'intérêt sur une image d'un environnement entourant une embarcation (100), le système comprenant :
un appareil électronique (1460) doté d'un dispositif d'affichage (1440) ;
au moins un processeur (1410) ;
une caméra (1474B) ;
une mémoire (1420) sur laquelle sont stockées des instructions logicielles qui, lorsqu'elles sont exécutées par ledit au moins un processeur, amènent l'au moins un processeur à :
recevoir des informations d'emplacement et des informations d'orientation pour l'appareil électronique ou l'embarcation ;
amener, sur la base de données de caméra reçues à partir de la caméra, une présentation de l'image (1679A) de l'environnement entourant l'embarcation ;
déterminer un champ de vision (1675) pour la caméra qui inclut dans l'image l'environnement entourant l'embarcation ;
identifier un emplacement d'intérêt (1677B) ou une représentation de l'emplacement d'intérêt qui correspond au champ de vision, dans lequel l'emplacement d'intérêt se trouve sous l'eau ;
amener la représentation (1679B), sur le dispositif d'affichage, de l'emplacement d'intérêt (1677B) à être superposée à l'image à une position au-dessus de l'eau au niveau de l'emplacement dans le champ de vision, de manière à générer une image en réalité augmentée ;
recevoir une entrée demandant des informations complémentaires pour l'emplacement d'intérêt ; et
amener la présentation, sur le dispositif d'affichage, d'informations supplémentaires concernant l'emplacement d'intérêt à la position au-dessus de l'eau au niveau de l'emplacement dans le champ de vision, dans lequel les informations supplémentaires sont une deuxième image de l'emplacement d'intérêt, dans lequel la deuxième image est une image sous-marine.

2. Système selon la revendication 1, dans lequel la représentation comprend un symbole de l'emplacement d'intérêt.

3. Système selon la revendication 1, dans lequel l'emplacement d'intérêt (1677B) correspond à au moins l'un parmi une épave sous-marine, un récif sous-marin, une décharge sous-marine ou un animal.

4. Système selon la revendication 1, dans lequel la deuxième image (1679B) est une image sonar de l'emplacement d'intérêt.

5. Système selon la revendication 1, dans lequel les instructions logicielles, lorsqu'elles sont exécutées par l'au moins un processeur, amènent l'au moins un processeur à :
identifier un deuxième emplacement d'intérêt qui est situé dans le champ de vision (1675) ; et
amener une deuxième représentation du deuxième emplacement d'intérêt à être superposée à l'image.

6. Système selon la revendication 1, dans lequel les instructions logicielles, lorsqu'elles sont exécutées par l'au moins un processeur, amènent l'au moins un processeur à :
présenter des informations de distance pour l'emplacement d'intérêt.

7. Système selon la revendication 1, dans lequel les instructions logicielles, lorsqu'elles sont exécutées par l'au moins un processeur, amènent l'au moins un processeur à :
présenter un indicateur sur le dispositif d'affichage, dans lequel l'indicateur fournit un guidage de navigation pour comment atteindre l'emplacement d'intérêt.

8. Système selon la revendication 1, dans lequel les instructions logicielles, lorsqu'elles sont exécutées par l'au moins un processeur, amènent l'au moins un processeur à :
présenter une indication environnementale sur le dispositif d'affichage,
dans lequel l'indication environnementale est liée à une condition environnementale, dans lequel la condition environnementale est au moins l'une parmi une vitesse du vent, un courant, une température de l'eau ou une profondeur de l'eau.

9. Système selon la revendication 1, dans lequel le dispositif électronique est un téléphone, une tablette, un ordinateur, des lunettes intelligentes ou un casque.

10. Système selon la revendication 1, dans lequel la caméra est intégrée au dispositif électronique.

11. Procédé de superposition d'une représentation d'un emplacement d'intérêt sur une image d'un environnement entourant une embarcation (100), le procédé comprenant :
la réception d'informations d'emplacement et d'informations d'orientation pour l'appareil électronique (1460) ou l'embarcation ;
le fait d'amener, sur la base de données de caméra reçues à partir de la caméra (1474B), une présentation de l'image de l'environnement entourant l'embarcation ;
la détermination d'un champ de vision (1675) pour la caméra qui inclut dans l'image l'environnement entourant l'embarcation ;
l'identification d'un emplacement d'intérêt (1677B) ou une représentation de cet emplacement d'intérêt qui correspond au champ de vision, dans lequel l'emplacement d'intérêt se trouve sous l'eau ;
le fait d'amener la représentation (1679B) de l'emplacement d'intérêt à être superposée à l'image à une position au-dessus de l'eau au niveau de l'emplacement dans le champ de vision, de manière à générer une image en réalité augmentée ;
la réception d'une entrée demandant des informations complémentaires pour l'emplacement d'intérêt ; et
le fait d'amener la présentation d'informations supplémentaires concernant l'emplacement d'intérêt à la position au-dessus de l'eau au niveau de l'emplacement dans le champ de vision, dans lequel les informations supplémentaires sont une deuxième image de l'emplacement d'intérêt, dans lequel la deuxième image est une image sous-marine.

12. Procédé selon la revendication 11, comprenant en outre :
l'identification d'un deuxième emplacement d'intérêt qui est situé dans le champ de vision ; et
le fait d'amener une deuxième représentation du deuxième emplacement d'intérêt à être superposée à l'image.

13. Procédé selon la revendication 12, comprenant en outre :
la présentation d'informations de distance pour l'emplacement d'intérêt.

14. Procédé selon la revendication 13, comprenant en outre :
la présentation d'un indicateur sur le dispositif d'affichage, dans lequel l'indicateur fournit un guidage de navigation pour comment atteindre l'emplacement d'intérêt.

15. Procédé selon la revendication 14, comprenant en outre :
la présentation d'une indication environnementale sur le dispositif d'affichage,
dans lequel l'indication environnementale est liée à une condition environnementale, dans lequel la condition environnementale est au moins l'une parmi une vitesse du vent, un courant, une température de l'eau ou une profondeur de l'eau.
